(19) Europäisches Patentamt

European Patent Office

Office européen des brevets

(11) **EP 4 583 469 A1**

(12) **EUROPEAN PATENT APPLICATION**
published in accordance with Art. 153(4) EPC

(43) Date of publication:
09.07.2025 Bulletin 2025/28

(21) Application number: 22961785.7

(22) Date of filing: 14.10.2022

(51) International Patent Classification (IPC):
*H04L 27/00* (2006.01)

(52) Cooperative Patent Classification (CPC):
H04W 12/033; H04L 27/00; H04L 63/1475;
H04L 63/16

(86) International application number:
PCT/CN2022/125368

(87) International publication number:
WO 2024/077597 (18.04.2024 Gazette 2024/16)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: HUAWEI TECHNOLOGIES CO., LTD.
Shenzhen, Guangdong 518129 (CN)

(72) Inventors:
• LIU, Peng
Shenzhen, Guangdong 518129 (CN)
• SUN, Li
Shenzhen, Guangdong 518129 (CN)
• LU, Xianhui
Shenzhen, Guangdong 518129 (CN)
• HUANG, Mengjie
Shenzhen, Guangdong 518129 (CN)

(74) Representative: Pfenning, Meinig & Partner mbB
Patent- und Rechtsanwälte
Theresienhöhe 11a
80339 München (DE)

(54) **WIRELESS PHYSICAL LAYER SECURE COMMUNICATION METHOD, AND COMMUNICATION APPARATUS**

(57) Embodiments of this application provide a secure communication method for a wireless physical layer and a communication apparatus. The method includes: A first apparatus preprocesses first data based on a bit error rate of a third apparatus, where the preprocessing is used to enable communication between the first apparatus and a second apparatus to reach a security level. The first apparatus sends second data to the second apparatus, where the second data is data obtained by preprocessing the first data. In this solution, before sending data, a transmit end preprocesses the to-be-sent data. The preprocessing introduces the bit error rate of the third apparatus, so that the communication between the first apparatus and the second apparatus can reach the security level. This can improve communication security.

FIG. 5

EP 4 583 469 A1

## Description

## TECHNICAL FIELD

Embodiments of this application relate to the communication field, and more specifically, to a secure communication method for a wireless physical layer and a communication apparatus.

## BACKGROUND

Secure transmission is basic guarantee of communication. Conventional secure transmission solutions are based on keys. Key encryption can be classified into symmetric encryption and asymmetric encryption. In symmetric encryption, two parties share a key. In asymmetric encryption, one party for communication needs to transmit a public key to the other party, and a transmitter uses the public key for encryption, and a receiver uses a private key for decryption. Both methods require maintenance and management of the key, and maintenance and management of the key needs to be supported by complex protocols. However, vulnerabilities of the protocols are prone to be attacked, and the key may be leaked, which may be risky. In addition, the complex protocol generates extra communication overheads and a delay, and cannot adapt to a high dynamic characteristic of a future communication network.

Compared with the conventional secure transmission solutions, a physical layer secure transmission technology uses means such as signal processing and coding and modulation based on a physical characteristic of a radio channel, to implement keyless secure transmission with low communication overheads.

Therefore, for wireless communication security, it is critical to improve security performance of the physical layer security transmission technology.

## SUMMARY

Embodiments of this application provide a secure communication method for a wireless physical layer and a communication apparatus, to improve communication security performance in a keyless transmission scenario.

According to a first aspect, a secure communication method for a wireless physical layer is provided. The method may be performed by a first apparatus. The first apparatus may be a terminal device or a network device, or may be a chip or a circuit in the terminal device or the network device, or may be a logical module or software that can implement all or some functions of the terminal device or the network device. This is not limited in this application.

The method includes: The first apparatus preprocesses first data based on a bit error rate of a third apparatus, where the preprocessing is used to enable communication between the first apparatus and a second apparatus to reach a security level. The first apparatus sends second data to the second apparatus, where the second data is data obtained by preprocessing the first data.

In the foregoing solution, before sending data, a transmit end preprocesses the to-be-sent data. The preprocessing introduces the bit error rate of the third apparatus, so that communication between the first apparatus and the second apparatus can reach the security level. This can improve communication security.

In addition, this solution can customize security levels, to provide differentiated security services for different legitimate receivers. For example, an Internet of things (Internet of things, IoT) terminal has limited computing power and a low security requirement, so that a low security level may be customized by using the solution in this application. Therefore, the solution is more flexible.

With reference to the first aspect, in some implementations of the first aspect, that the first apparatus preprocesses first data based on a bit error rate of a third apparatus includes: The first apparatus divides the first data based on the bit error rate of the third apparatus; or divides the first data based on the bit error rate of the third apparatus, and generates a first random string.

In the foregoing solution, the first data is divided, so that each packet of the first data can obtain provable security strength. This helps improve communication security.

With reference to the first aspect, in some implementations of the first aspect, that the first apparatus divides the first data based on the bit error rate of the third apparatus includes: The first apparatus determines a packet length of the first data based on the bit error rate and the security level, and divides the first data at a granularity of the packet length.

With reference to the first aspect, in some implementations of the first aspect, the method further includes: The first apparatus performs an operation on the divided first data based on the first random string.

In the foregoing solution, when the first data is preprocessed, transmission security of the first data can be improved by introducing the first random string.

With reference to the first aspect, in some implementations of the first aspect, that the first apparatus performs an operation on the divided first data based on the first random string includes: The first apparatus obtains a first bit string based on the first random string and a second random string, and performs an operation on the divided first data based on the first bit string.

In the foregoing solution, when the first data is preprocessed and post-processed, the first bit string may be equivalent to a key, so that each packet of the first data can obtain provable security strength. This helps improve communication security.

With reference to the first aspect, in some implementations of the first aspect, a length of the first random string is greater than or equal to the packet length, and a length of a second random vector is equal to the length of the first random string.

In the foregoing solution, because the length of the first random string is greater than or equal to the packet length, a physical layer security transmission technology needs to be performed only on the first random string, and the solution is easy to implement.

With reference to the first aspect, in some implementations of the first aspect, a length of the first random string is less than the packet length, and a length of a second random vector is equal to the packet length.

In the foregoing solution, because the length of the first random string may be less than the packet length, a transmission rate loss is small, and a bit rate is high.

With reference to the first aspect, in some implementations of the first aspect, the method further includes: The first apparatus sends the second random string to the second apparatus.

With reference to the first aspect, in some implementations of the first aspect, the packet length is a block size of channel encoding.

In the foregoing solution, the packet length is the block size of channel encoding, so that channel encoding is less complex, and is easy to implement.

With reference to the first aspect, in some implementations of the first aspect, the method further includes: The first apparatus sends first information to the second apparatus, or receives first information from the second apparatus. The first information indicates the security level.

In the foregoing solution, a receive end and the transmit end align the security level based on signaling, so that the security level can be customized based on a requirement, and flexibility is higher.

With reference to the first aspect, in some implementations of the first aspect, the first information is indication information.

With reference to the first aspect, in some implementations of the first aspect, the indication information indicates a type of a terminal device, and there is a correspondence between the type of the terminal device and the communication security level.

In the foregoing manner, the type of the terminal device indicates the security level, so that the security level better matches an operation capability of the terminal device. This can reduce implementation complexity of the terminal.

With reference to the first aspect, in some implementations of the first aspect, the method further includes: The first apparatus receives second information from the second apparatus, or sends second information to the second apparatus. The second information indicates the bit error rate.

In the foregoing solution, the receive end and the transmit end align the bit error rate based on signaling, to facilitate implementation of preprocessing and post-processing.

With reference to the first aspect, in some implementations of the first aspect, the second information is indication information.

With reference to the first aspect, in some implementations of the first aspect, the method further includes: The first apparatus determines the bit error rate.

In the foregoing solution, the first apparatus can determine the bit error rate, so that the determined bit error rate is more suitable for an actual scenario. When preprocessing is performed based on the determined bit error rate, communication security in a current environment can be improved.

With reference to the first aspect, in some implementations of the first aspect, that the first apparatus determines the bit error rate includes: The first apparatus determines a confined region, where the second apparatus is located in the confined region, and the third apparatus is located outside the confined region; determines an optimal communication location outside the confined region, where the third apparatus has optimal receiving performance at the optimal communication location; and determines the bit error rate based on the optimal communication location.

In the foregoing solution, the bit error rate is estimated based on the optimal communication location outside the confined region. When preprocessing is performed based on the determined bit error rate, a preprocessed result still has reliable security performance when a condition of the third apparatus is optimal.

According to a second aspect, a secure communication method for a wireless physical layer is provided. The method may be performed by a second apparatus. The second apparatus may be a terminal device or a network device, or may be a chip or a circuit in the terminal device or the network device, or may be a logical module or software that can implement all or some functions of the terminal device or the network device. This is not limited in this application.

The method includes: The second apparatus receives second data from a first apparatus, and post-processes the second data, to obtain first data. The second data is data obtained by preprocessing the first data based on a bit error rate of a third apparatus, and the preprocessing is used to enable communication between the first apparatus and the second apparatus to reach a security level.

In the foregoing solution, before sending data, a transmit end preprocesses the to-be-sent data. The preprocessing introduces the bit error rate of the third apparatus, so that communication between the first apparatus and the second apparatus can reach the security level. This can improve communication security.

In addition, this solution can customize security levels, to provide differentiated security services for different legitimate receivers. For example, an Internet of things (Internet of things, IoT) terminal has limited computing power and a low security requirement, so that a low security level may be customized by using the solution in this application. Therefore, the solution is more flexible.

With reference to the second aspect, in some implementations of the second aspect, that the second apparatus post-processes the second data includes: The second apparatus divides the second data, and processes the divided second data based on a second random string.

With reference to the second aspect, in some implementations of the second aspect, the second data includes a first random string, and that the second apparatus processes the divided second data based on a second random string includes: The second apparatus obtains a first bit string based on the first random string and the second random string, and performs an operation on the divided second data based on the first bit string.

In the foregoing solution, when the first data is preprocessed and post-processed, the first bit string may be equivalent to a key, so that each packet of the first data can obtain provable security strength. This helps improve communication security.

With reference to the second aspect, in some implementations of the second aspect, the method further includes: The second apparatus receives the second random string from the first apparatus.

With reference to the second aspect, in some implementations of the second aspect, the method further includes: The second apparatus receives first information from the first apparatus, or sends first information to the first apparatus. The first information indicates the security level.

In the foregoing solution, a receive end and the transmit end align the security level based on signaling, so that the security level can be customized based on a requirement, and flexibility is higher.

With reference to the second aspect, in some implementations of the second aspect, the first information is indication information.

With reference to the second aspect, in some implementations of the second aspect, the indication information indicates a type of a terminal device, and there is a correspondence between the type of the terminal device and the communication security level.

In the foregoing manner, the type of the terminal device indicates the security level, so that the security level better matches an operation capability of the terminal device. This can reduce implementation complexity of the terminal.

With reference to the second aspect, in some implementations of the second aspect, the method further includes: The second apparatus receives second information from the first apparatus, or sends second information to the first apparatus. The second information indicates the bit error rate.

In the foregoing solution, the receive end and the transmit end align the bit error rate based on signaling, to facilitate implementation of preprocessing and post-processing.

With reference to the second aspect, in some implementations of the second aspect, the second information is indication information.

With reference to the second aspect, in some implementations of the second aspect, the method further includes: The second apparatus determines the bit error rate.

In the foregoing solution, the second apparatus can also determine the bit error rate, so that the determined bit error rate is more suitable for an actual scenario. When preprocessing is performed based on the determined bit error rate, communication security in a current environment can be improved.

With reference to the second aspect, in some implementations of the second aspect, that the second apparatus determines the bit error rate includes: The second apparatus determines a confined region, where the second apparatus is located in the confined region, and the third apparatus is located outside the confined region; determines an optimal communication location outside the confined region, where the third apparatus has optimal receiving performance at the optimal communication location; and determines the bit error rate based on the optimal communication location.

In the foregoing solution, the bit error rate is estimated based on the optimal communication location outside the confined region. When preprocessing is performed based on the determined bit error rate, a preprocessed result still has reliable security performance when a condition of the third apparatus is optimal.

According to a third aspect, a communication apparatus is provided. The communication apparatus is a first apparatus. The first apparatus may be a terminal device or a network device, or may be a chip or a circuit in the terminal device or the network device, or may be a logical module or software that can implement all or some functions of the terminal device or the network device. This is not limited in this application.

The first apparatus may include a transceiver unit and a processing unit. The processing unit is configured to preprocess first data based on a bit error rate of a third apparatus, where the preprocessing is used to enable communication between the first apparatus and a second apparatus to reach a security level. The transceiver unit is configured to send second data to the second apparatus, where the second data is data obtained by preprocessing the first data.

With reference to the third aspect, in some implementations of the third aspect, the processing unit is specifically configured to: divide the first data based on the bit error rate of the third apparatus; or divide the first data based on the bit error rate of the third apparatus, and generate a first random string.

With reference to the third aspect, in some implementations of the third aspect, the processing unit is specifically configured to determine a packet length of the first data based on the bit error rate and the security level, and divide the first data at a granularity of the packet length.

With reference to the third aspect, in some implementations of the third aspect, the processing unit is further configured to perform an operation on the divided first data based on the first random string.

With reference to the third aspect, in some implementations of the third aspect, the processing unit is specifically configured to obtain a first bit string based on the first random string and a second random string, and perform an operation on the divided first data based on the first bit string.

With reference to the third aspect, in some implementations of the third aspect, a length of the first random string is greater than or equal to the packet length, and a length of a second random vector is equal to the length of the first random string.

With reference to the third aspect, in some implementations of the third aspect, a length of the first random string is less than the packet length, and a length of a second random vector is equal to the packet length.

With reference to the third aspect, in some implementations of the third aspect, the transceiver unit is further configured to send the second random string to the second apparatus.

With reference to the third aspect, in some implementations of the third aspect, the packet length is a block size of channel encoding.

With reference to the third aspect, in some implementations of the third aspect, the transceiver unit is further configured to send first information to the second apparatus, or receive first information from the second apparatus. The first information indicates the security level.

With reference to the third aspect, in some implementations of the third aspect, the first information is indication information.

With reference to the third aspect, in some implementations of the third aspect, the indication information indicates a type of a terminal device, and there is a correspondence between the type of the terminal device and the communication security level.

With reference to the third aspect, in some implementations of the third aspect, the transceiver unit is further configured to receive second information from the second apparatus, or send second information to the second apparatus. The second information indicates the bit error rate.

With reference to the third aspect, in some implementations of the third aspect, the second information is indication information.

With reference to the third aspect, in some implementations of the third aspect, the processing unit is further configured to determine the bit error rate.

With reference to the third aspect, in some implementations of the third aspect, the processing unit is specifically configured to determine a confined region, where the second apparatus is located in the confined region, and the third apparatus is located outside the confined region; determine an optimal communication location outside the confined region, where the third apparatus has optimal receiving performance at the optimal communication location; and determine the bit error rate based on the optimal communication location.

According to a fourth aspect, a communication apparatus is provided. The communication apparatus is a second apparatus. The second apparatus may be a terminal device or a network device, or may be a chip or a circuit in the terminal device or the network device, or may be a logical module or software that can implement all or some functions of the terminal device or the network device. This is not limited in this application.

The second apparatus may include a transceiver unit and a processing unit. The transceiver unit is configured to receive second data from a first apparatus, and the processing unit is configured to post-process the second data, to obtain first data. The second data is data obtained by preprocessing the first data based on a bit error rate of a third apparatus, and the preprocessing is used to enable communication between the first apparatus and the second apparatus to reach a security level.

With reference to the fourth aspect, in some implementations of the fourth aspect, the processing unit is specifically configured to divide the second data, and process the divided second data based on a second random string.

With reference to the fourth aspect, in some implementations of the fourth aspect, the second data includes a first random string. The processing unit is further configured to obtain a first bit string based on the first random string and the second random string, and perform an operation on the divided second data based on the first bit string.

With reference to the fourth aspect, in some implementations of the fourth aspect, the transceiver unit is further configured to receive the second random string from the first apparatus.

With reference to the fourth aspect, in some implementations of the fourth aspect, the transceiver unit is further configured to receive first information from the first apparatus, or send the first information to the first apparatus. The first information indicates the security level.

With reference to the fourth aspect, in some implementations of the fourth aspect, the first information is indication information.

With reference to the fourth aspect, in some implementations of the fourth aspect, the indication information indicates a type of a terminal device, and there is a correspondence between the type of the terminal device and the communication security level.

With reference to the fourth aspect, in some implementations of the fourth aspect, the transceiver unit is further configured to receive second information from the first apparatus, or send second information to the first apparatus. The second information indicates the bit error rate.

With reference to the fourth aspect, in some implementations of the fourth aspect, the second information is indication information.

With reference to the fourth aspect, in some implementations of the fourth aspect, the processing unit is further configured to determine the bit error rate.

With reference to the fourth aspect, in some implementations of the fourth aspect, the processing unit is specifically configured to determine a confined region, where the second apparatus is located in the confined region, and the third apparatus is located outside the confined region; determine an optimal communication location outside the confined region, where the third apparatus has optimal receiving performance at the optimal communication location; and determine the bit error rate based on the optimal communication location.

According to a fifth aspect, a communication apparatus is provided. The apparatus includes a processor. The processor is coupled to a memory, and may be configured to execute instructions in the memory, to implement the method in the first aspect or the second aspect and any possible implementation of the first aspect or the second aspect. Optionally, the apparatus further includes the memory. The memory and the processor may be separately deployed, or may be deployed in a central manner. Optionally, the apparatus further includes a communication interface, and the processor is coupled to the communication interface. In an implementation, the communication interface may be a transceiver or an input/output interface.

When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus is provided. The apparatus includes a logic circuit and an input/output interface, and the logic circuit is configured to: be coupled to the input/output interface, and perform transmission of data through the input/output interface, to perform the method in the first aspect or the second aspect and any possible implementation of the first aspect or the second aspect.

According to a seventh aspect, a communication system is provided. The system includes the first apparatus in the third aspect or any possible implementation of the third aspect, and the second apparatus in the fourth aspect or any possible implementation of the fourth aspect.

According to an eighth aspect, a computer-readable storage medium is provided. The computer-readable storage medium stores a computer program (which may also be referred to as code or instructions). When the computer program is run on a computer, the computer is enabled to perform the method in the first aspect or the second aspect and any possible implementation of the first aspect or the second aspect.

According to a ninth aspect, a computer program product is provided. The computer program product includes a computer program (which may also be referred to as code or instructions). When the computer program is run, a computer is enabled to perform the method in the first aspect or the second aspect and any possible implementation of the first aspect or the second aspect.

For beneficial effect brought by the third aspect to the ninth aspect, refer to descriptions of beneficial effect in the first aspect and the second aspect. Details are not described herein again.

**BRIEF DESCRIPTION OF DRAWINGS**

FIG. 1 is a diagram of a communication system 100 of a communication method applicable to an embodiment of this application;

FIG. 2 is a diagram of a structure of an apparatus according to an embodiment of this application;

FIG. 3 is a diagram of physical layer secure transmission implemented by using artificial noise;

FIG. 4 is a diagram of bit error rates, of UE #2 and UE #3, caused by artificial noise;

FIG. 5 is an interaction flowchart of a secure communication method 200 for a wireless physical layer according to an embodiment of this application;

FIG. 6 is a diagram of a preprocessing process according to an embodiment of this application;

FIG. 7 is a diagram of a post-processing process according to an embodiment of this application;

FIG. 8 is a schematic flowchart of data transmission according to this application;

FIG. 9 is a diagram of a confined region;

FIG. 10 shows a secure communication method 300 for a wireless physical layer according to this application;

FIG. 11 shows a secure communication method 400 for a wireless physical layer according to this application;

FIG. 12 is a block diagram of a communication apparatus according to an embodiment of this application;

FIG. 13 shows a communication apparatus 600 according to an embodiment of this application; and

FIG. 14 shows a communication apparatus 700 according to an embodiment of this application.

## DESCRIPTION OF EMBODIMENTS

The following describes technical solutions of this application with reference to accompanying drawings.

The technical solutions in embodiments of this application may be applied to various communication systems, for example, a global system for mobile communication (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) mobile communication system or a new radio (new radio, NR) system, a wireless local area network (wireless local area network, WLAN) system, and a wireless fidelity (wireless fidelity, Wi-Fi) system. The 5G mobile communication system may be non-standalone (Non-standalone, NSA) or standalone (Standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an Internet of things (Internet of things, IoT) network, or another network. The IoT network may include, for example, an Internet of vehicles. Communication manners in an Internet of vehicles system are collectively referred to as vehicle to everything (vehicle to X, V2X, where X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to pedestrian, V2P), vehicle to network (vehicle to network, V2N) communication, or the like.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile Internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a home appliance like a television, a smart set top box, and a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN). Alternatively, the terminal device may be a non-access point station (station, STA) in a wireless fidelity (wireless fidelity, Wi-Fi) system.

The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices dedicated to only one type of application function and need to work with other devices such as smartphones, for example, various smart bands or smart jewelry for monitoring physical signs.

In addition, the terminal device may alternatively be a terminal device in an Internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In embodiments of this application, the terminal device may alternatively be a vehicle or an entire vehicle, and may implement communication by using Internet of vehicles, or may be a component located in the vehicle (for example, placed in the vehicle or installed in the vehicle), that is, an on-board terminal device, an on-board module, or an on-board unit (on-board unit, OBU).

In addition, the terminal device may alternatively include a sensor such as an intelligent printer, a train detector, or a gas station, and main functions include: collecting data (for some terminal devices), receiving control information and downlink data of a network device, sending an electromagnetic wave, and transmitting uplink data to the network device.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (Baseband unit, BBU), an access point (access point, AP), a wireless relay node, a wireless backhaul node, a transmission point (Transmission point, TP), or a transmission and reception point (Transmission and reception point, TRP) in a wireless fidelity (Wireless fidelity, Wi-Fi) system, or the like. Alternatively, the device may be a gNB or a transmission point (TRP or TP) in a 5G system like NR, one or one group of antenna panels (including a plurality of antenna panels) in a base station in a 5G system, a network node that forms a gNB or a transmission point, for example, a baseband unit (BBU) or a distributed unit (distributed unit, DU), or a base station in a next-generation 6G communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed into information at the PHY layer, or is changed from information at the PHY layer. Therefore, in this architecture, higher layer signaling such as RRC layer signaling may also be considered as being sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device uses a transmission resource (for example, a frequency domain resource or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

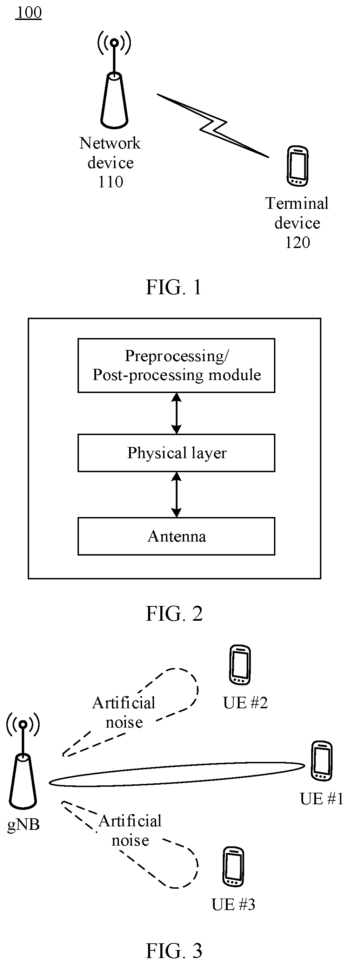

FIG. 1 is a diagram of a communication system 100 of a communication method applicable to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system, the plurality of configured antennas may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that FIG. 1 is merely a simplified schematic diagram used as an example for ease of understanding. The communication system may further include another network device or another terminal device that is not shown in FIG. 1.

It should be further understood that the communication system 100 shown in FIG. 1 is merely an example of an application scenario of embodiments of this application. This application is further applicable to communication between any two devices, for example, communication between terminal devices, or communication between network devices.

FIG. 2 is a diagram of a structure of an apparatus according to an embodiment of this application. The apparatus may be a terminal device or a network device. Functional modules in the apparatus include a preprocessing/post-processing module, a physical layer (physical layer, PHY) processing module, an antenna, and the like. The preprocessing/post-processing module may be located at any layer above a physical layer, for example, may be located at a media access control (media access control, MAC) layer. For a transmit end, before channel encoding, the preprocessing/post-processing module may preprocess to-be-sent data. For a receive end, after channel decoding, the preprocessing/post-processing module may post-process received data. It may be understood that the diagram of the apparatus provided in FIG. 2 is an example, and does not constitute a limitation on the apparatus in this application. For a specific process of preprocessing and post-processing, refer to a method 200.

Secure transmission is the basic guarantee of communication. Conventional secure transmission solutions are based on keys, and are classified into symmetric encryption and asymmetric encryption. In symmetric encryption, two parties share a key. In asymmetric encryption, one party that requires communication transmits a public key to the other party, and a transmitter uses the public key for encryption, and a receiver uses the private key for decryption. Both methods require maintenance and management of the key, and maintenance and management of the key needs to be supported by complex protocols. However, vulnerabilities of the protocols are prone to be attacked, and the key may be leaked, causing a security risk. In addition, the complex protocol generates extra communication overheads and a delay, and cannot adapt to a high dynamic characteristic of a future communication network.

In a current wireless communication protocol, control signaling at a physical layer and a MAC layer is not encrypted based on a key. For example, some signaling is generated before key agreement. Consequently, a key-based secure communication method cannot be used. Compared with the conventional secure transmission solutions, a physical layer secure transmission technology uses means such as signal processing and coding and modulation based on a physical characteristic of a radio channel, to implement keyless secure transmission with low communication overheads.

Specifically, physical layer secure transmission is a keyless secure transmission solution. In physical layer secure transmission, advantages of channels are obtained through signal processing, so that quality of legitimate channels is better than that of illegitimate channels. In this way, secrete communication is implemented between legitimate parties without sharing keys. The physical layer security transmission technology may be, for example, channel encoding, artificial noise, pre-encoding, and waveform modulation. The physical layer security transmission technology may be summarized as a technology that causes an error floor generated by an illegitimate receive end.

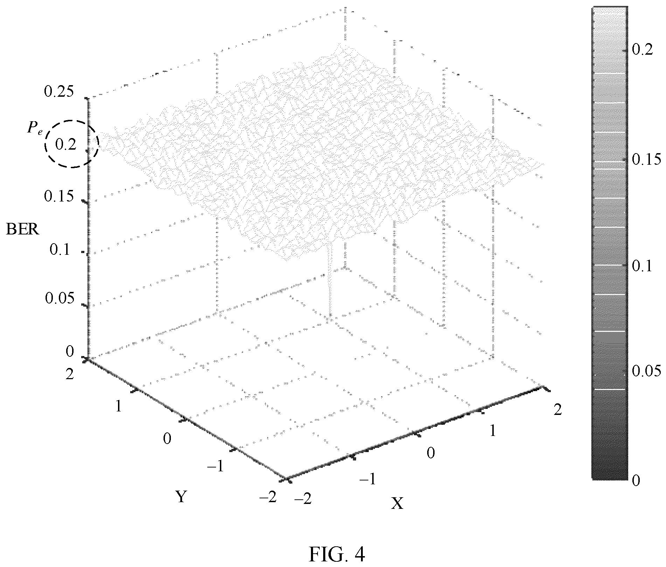

FIG. 3 is a diagram of physical layer secure transmission implemented by using artificial noise. As shown in FIG. 3, a gNB (an example of a first apparatus) needs to implement secure communication with UE #1 (an example of a second apparatus), so that neither UE #2 (an example of a third apparatus) nor UE #3 (another example of a third apparatus) can obtain information transmitted between the gNB and the UE #1. Therefore, a channel between the gNB and the UE #1 is a legitimate channel, and a channel between the gNB and the UE #2 and a channel between the gNB and the UE #3 are illegitimate channels. In an implementation, the UE #2 and the UE #3 are interfered by using artificial noise. In artificial noise, a noise signal is injected in null space of a legitimate channel by using a multi-antenna pre-encoding method, which causes an error floor generated by a receiver (which is referred to as an illegitimate receiver, for example, the UE #2 and the UE #3 in FIG. 3) on an illegitimate channel, but does not cause interference to a receiver (which is referred to as a legitimate receiver, for example, the UE #1 in FIG. 3) on a legitimate channel. For details, refer to FIG. 4.

FIG. 4 is a diagram of bit error rates of the UE #2 and the UE #3. As shown in FIG. 4, a Z-axis indicates a bit error rate (bit error rate, BER) $P_e$, and an X-axis and a Y-axis indicate two directions perpendicular to each other on a horizontal plane. For example, the X-axis indicates a north-south direction, and the Y-axis indicates an east-west direction. A location on the horizontal plane may be determined based on (X, Y). An origin (0, 0) of coordinates is a location of the legitimate receiver UE #1, and the illegitimate receivers UE #2 and UE #3 may be located at any locations other than the origin of coordinates. It can be learned from FIG. 4 that, at most locations other than the origin of coordinates, bit error rates of the UE #2 and the UE #3 reach 0.2, that is, an error floor (floor) is generated, which makes decoding more difficult.

However, based only on the foregoing physical layer security transmission technology, improvement of the error floor of the illegitimate receiver is limited, and consequently, communication security cannot be ensured. Therefore, for wireless communication security, it is critical to improve security performance of the physical layer security transmission technology.

In view of this, this application provides a secure communication method for a wireless physical layer and a communication apparatus. In this solution, a bit error rate is associated with a security level, to improve communication security performance.

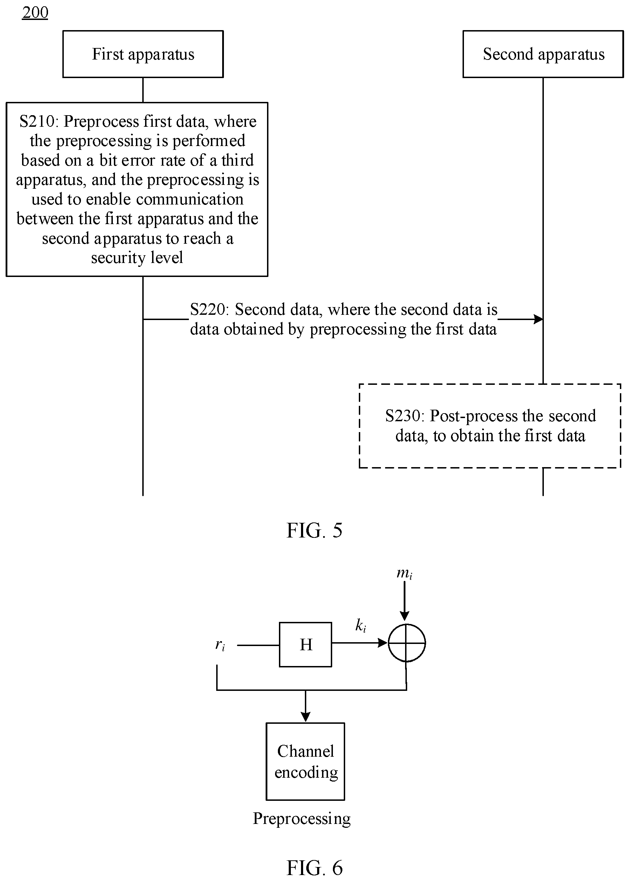

FIG. 5 is an interaction flowchart of a secure communication method for a wireless physical layer according to an embodiment of this application. A method 200 shown in FIG. 5 is applicable to the systems or apparatuses shown in FIG. 1 to FIG. 3, and the method 200 includes the following steps.

S210: A first apparatus preprocesses first data.

The first data is to-be-sent data. For example, the first data may be MAC layer data. The first data may also be referred to as a to-be-sent message, and the first data may be control signaling.

The preprocessing is performed based on a bit error rate of a third apparatus, and the preprocessing is used to enable communication between the first apparatus and a second apparatus to reach a security level. In other words, a correspondence exists between the bit error rate and the security level, and the first apparatus can perform preprocessing according to the correspondence. The bit error rate is the bit error rate of the third apparatus, and the security level is a security level that the communication between the first apparatus and the second apparatus needs to reach. Alternatively, the preprocessing is implemented by using a random extractor. It should be understood that, in a physical layer security transmission technology, a random entropy is introduced to an illegitimate channel, so that an illegitimate receive end generates an error floor. The random extractor may extract and spread the random entropy introduced to the illegitimate channel by using the physical layer security transmission technology, to obtain an equivalent key that is approximately evenly distributed. The equivalent key may enable each bit of the first data to obtain provable security strength.

Specifically, the bit error rate of the third apparatus may be understood as a bit error rate generated by parsing physical layer data by the third apparatus.

Specifically, the security level of the communication between the first apparatus and the second apparatus may be understood as complexity of calculation generated when the third apparatus obtains the first data through brute force attacking. For example, if the security level of communication between the first apparatus and the second apparatus is 128, it indicates that a quantity of times that the third apparatus needs to perform brute force attacking is $2^{128}$.

The first apparatus is a transmit end of the first data, the second apparatus is a receive end of the first data, a channel between the first apparatus and the second apparatus is a legitimate channel, and the second apparatus may also be referred to as a legitimate receive end or a target receive end of the first data. A channel between the first apparatus and the third apparatus is an illegitimate channel. In other words, the third apparatus is an illegitimate receive end or a non-target receive end of the first data. It should be understood that the third apparatus may be a device that actually exists, or may be an assumed device.

Optionally, in an implementation scenario, the first apparatus is a network device #1, the second apparatus is a terminal device #1, and the third apparatus may be a terminal device #2 or a network device #2. In another implementation scenario, the first apparatus is the terminal device #1, the second apparatus is the network device #1, and the third apparatus may be the network device #2 or the terminal device #2. In another implementation scenario, the first apparatus is the terminal device #1, the second apparatus is the terminal device #2, and the third apparatus may be a terminal device #3. In another implementation scenario, the first apparatus is the network device #1, the second apparatus is the network device #2, and the third apparatus may be a network device #3. The foregoing implementation scenarios are merely examples, and do not constitute a limitation on this application.

In the field of secure communication, the first apparatus may be understood as Alice, the second apparatus may be understood as Bob, and the third apparatus may be understood as Eve.

S220: The first apparatus sends second data to the second apparatus, and correspondingly, the second apparatus receives the second data.

The second data is data obtained by preprocessing the first data, and the preprocessing may be understood as encrypting the first data. It should be understood that the second data is physical layer data.

Optionally, the first apparatus may send all bits of the second data by using the physical layer security transmission technology; or may send some bits of the second data by using the physical layer security transmission technology, and send remaining bits of the second data by using a conventional physical layer transmission technology. The conventional physical layer transmission technology may be understood as a technology that does not cause an error floor generated by the illegitimate receive end.

In the foregoing solution, before sending data, the transmit end preprocesses the to-be-sent data. The preprocessing introduces the bit error rate of the third apparatus, so that communication between the first apparatus and the second apparatus can reach the security level. This can improve communication security. In comparison, in the conventional technology, only a bit error rate is considered, and security cannot be ensured by using the physical layer security transmission technology.

Specifically, in the conventional physical layer security transmission technology, the bit error rate is considered, so that the bit error rate of the third apparatus may reach a specific level. However, the bit error rate is not equivalent to the security. For example, the bit error rate 0.3 only indicates that 30 of 100 bits may be incorrect, but from a perspective of security, the 100 bits may be restored from the 30 bits. In this application, the bit error rate can be increased through preprocessing. For example, the bit error rate may be increased from 0.3 to 0.5. In addition, it can be proved that a specific security level may be reached based on the increased bit error rate. For example, a security level 128 indicates that a quantity of times that the third apparatus needs to perform brute force attacking is $2^{128}$, to improve communication security.

In addition, this solution can customize security levels, to provide differentiated security services for different legitimate receivers. For example, an IoT terminal has limited computing power and a low security requirement, so that a low security level may be customized by using the solution in this application. Therefore, the solution is more flexible.

Optionally, the method further includes S230: The second apparatus post-processes the second data, to obtain the first data.

Specifically, after performing a physical layer security transmission technology such as modulation and demodulation and channel decoding, the second apparatus may obtain the second data, and further post-process the second data, to obtain the first data.

The post-processing may be understood as an inverse operation of the preprocessing, that is, decrypting the second data to obtain the first data.

In an implementation of S210, that the first apparatus preprocesses the first data based on the bit error rate of the third apparatus includes: The first apparatus divides the first data based on the bit error rate of the third apparatus, and generates a first random string.

That the first apparatus divides the first data based on the bit error rate of the third apparatus includes: The first apparatus determines a packet length of the first data based on the bit error rate and the security level, and divides the first data at a granularity of the packet length. That the first apparatus generates the first random string based on the bit error rate of the third apparatus includes: The first apparatus determines a length $r$ of a random string based on the bit error rate and the security level, and generates the first random string based on the length $r$.

Specifically, a correspondence exists between the bit error rate, the security level, the packet length $b$, and the length $r$ of the random string. After the bit error rate and the security level are determined, one of values of the length $r$ of the random string and the packet length $b$ may be specified, and then the other is calculated.

Optionally, the packet length is a block size of channel encoding. In other words, when dividing the first data, the first apparatus may use the block size of channel encoding as the packet length of the first data. In channel encoding, a bitstream is divided, and a quantity of bits of each block obtained through division is a block size of channel encoding or a block length of channel encoding.

Optionally, after the bit error rate, the security level, and the packet length $b$ are determined, the value of the length $r$ of the random string may be an integer multiple of $b$, provided that the correspondence between the bit error rate, the security level, the packet length $b$, and the length $r$ of the random string is met.

Optionally, in this implementation, that the first apparatus preprocesses the first data based on the bit error rate of the third apparatus further includes: The first apparatus performs an operation on the divided first data based on the first random string.

Specifically, the first apparatus may obtain the first bit string ($k_i$) based on the first random string ($r_i$) and a second random string ($S$), and perform an operation on the divided first data ($m_i$) based on the first bit string ($k_i$) to obtain third data ($c_i$).

The second random string ($S$) may be public. The second random string may be a random number that is generated by the transmit end and the receive end by using a synchronization mechanism and that is known by the two parties, and the synchronization mechanism may also be public. For example, the second random string may be determined by the transmit end, and then sent to the receive end in a message; or may be determined by the receive end, and then sent to the transmit end in a message.

Specifically, that the first apparatus may obtain the first bit string ($k_i$) based on the first random string ($r_i$) and the second random string ($S$) may be classified into the following two cases:

Case 1: The length $r$ of the random string is greater than or equal to the packet length $b$.

In this case, a length of the second random string ($S$) may be the same as a length of the first random string ($r_i$). When the first bit string ($k_i$) is obtained based on the first random string ($r_i$) and the second random string ($S$), first $b$ bits, namely, the first bit string, may be obtained from an operation result of the first random string ($r_i$) and the second random string ($S$). In other words, a length of the first bit string is equal to the packet length $b$.

Case 2: The length $r$ of the random string is less than the packet length $b$.

In this case, the length of the second random string ($S$) may be the same as the packet length $b$, and when the first bit string ($k_i$) is obtained based on the first random string ($r_i$) and the second random string ($S$), the first random string ($r_i$) may be padded first, so that a length of the padded first random string is the same as the packet length $b$. A padding manner may be appending ($b-r$) 0s to the first random string. An operation result of the padded first random string and the second random string ($S$) is the first bit string. In other words, the length of the first bit string is equal to the packet length $b$.

In this manner, because the third data is obtained by performing an operation on the divided first data ($m_i$) based on the first bit string ($k_i$), and the first bit string is obtained based on the first random string and the second random string, the first bit string may be understood as an equivalent key, and the first bit string may be used to spread the random entropy, to improve the bit error rate of the third apparatus.

It should be understood that increasing the bit error rate of the third apparatus means that the bit error rate of the third apparatus used during preprocessing is a, and when the illegitimate receive end decodes the preprocessed second data, a generated bit error rate is greater than a.

Optionally, in this implementation, the second data includes the first random string ($r_i$) and the third data.

Specifically, a concatenation operation may be performed on the first random string ($r_i$) and the third data. The concatenation operation may be understood as concatenating the first random string and the third data in series in any sequence. For example, the first random string is $r$=010, and the third data is $c$=110. A bit string obtained through the concatenation operation may be 010110 or 110010, provided that concatenation sequences of the two parties are consistent, and may be pre-configured.

In an implementation of S230, that the second apparatus post-processes the second data includes: The first apparatus divides the second data, to obtain the first random string and the third data.

Specifically, dividing the second data may be understood as an inverse operation of the concatenation operation. The second apparatus knows the concatenation sequence, and therefore, the second data can be divided, to obtain the first random string and the third data.

Optionally, in this implementation, that the second apparatus post-processes the second data further includes: The second apparatus processes the divided second data based on the second random string.

Specifically, because the second data includes the first random string, and the second apparatus knows the second random string, the second apparatus may also obtain the first bit string ($k_i$) based on the first random string and the second random string ($S$). Further, the second apparatus may perform an operation on the third data based on the first bit string ($k_i$), to obtain the divided first data. Further, the second apparatus concatenates the divided first data, to obtain the first data.

Based on a value relationship between the length $r$ of the random string and the packet length $b$, there are also two cases in which the second apparatus determines the first bit string: a case in which the length $r$ of the random string is greater than or equal to the packet length $b$, and a case in which the length $r$ of the random string is less than the packet length $b$. For specific processes, refer to the foregoing case 1 and case 2. Details are not described herein again.

The following describes the preprocessing and post-processing processes in detail by using examples.

In a first example of this implementation, a correspondence between the bit error rate and the security level is:

$$b \le r \cdot \log \frac{1}{1 - p_e} - 2\lambda + 2 \quad (1)$$

$b$ indicates the packet length, $r$ indicates the length of the random string, $p_e$ indicates the bit error rate of the third apparatus, and $\lambda$ indicates the security level, for example, a value of $\lambda$ may be 128 or 256.

According to the formula (1), the packet length may be customized based on the security level and the bit error rate of the third apparatus. It can be seen from the formula (1) that $r > b$, for example, $r$=1000, $p_e$=0.2, and a maximum value of $b$ is 67.

Specifically, the preprocessing process is as follows:

1. A to-be-sent message $M \in \{0,1\}^l$ is input, where a length of the to-be-sent message $M$ is $l$; and the to-be-sent message is divided based on a message packet length $b$, to obtain $q = \lceil l/b \rceil$ message packets, where the message packet is denoted as $m_i$, $i$ is an integer, and a value of $i$ is 1, 2, ..., or $q$.

2. $q$ random bit strings are generated, where the random bit string is denoted as $r_i$, $r_i \in \{0,1\}^r$, and a length is $r$, and the random bit strings may be generated by any random number generator.

3. Extraction operation H: $k_i = (S \odot r_i)|_b$, where $\odot$ indicates multiplication on a finite field GF($2^r$), $|_b$ indicates obtaining first $b$ bits of the bit string, and $S \in \{0,1\}^r$, that is, $S$ is a random bit string whose length is $r$.

4. $c_i = m_i \oplus k_i$ is calculated, where $\oplus$ indicates an exclusive OR operation.

5. Concatenation operation: $r_1 \| c_1 \| ... \| r_q \| c_q$, where "$\|$" indicates the concatenation operation, and a sequence is not limited, provided that the receive end and the transmit end specify the sequence. A concatenated bit string is output in the pre-processing process.

Correspondingly, the post-processing process is specifically as follows:

1. Error correction code is used, and $r_i$ and $c_i$ are obtained through division, and $S$ is known.

2. An operation of an extractor: $k_i = (S \odot r_i)|_b$.

3. $m_i = c_i \oplus k_i$ is calculated, where $\oplus$ indicates an exclusive OR operation.

4. A message M = $m_1 \| m_2 \| ... \| m_q$ is obtained.

In this example, the to-be-sent message $M$ is an example of the first data, $c_i$ is an example of the third data, $r_i$ is an example of the first random string, $S$ is an example of the second random string, $k_i$ is an example of the first bit string, and data obtained by concatenating $r_i$ and $c_i$ is an example of the second data. When the second data is sent, because the length $r$ of the random string is greater than the packet length $b$, implementation is simple. The random string $r_i$ may be sent by using the physical layer security transmission technology, and the third data $c_i$ may still be sent by using the conventional physical layer transmission technology.

In a second example of this implementation, a correspondence between the bit error rate and the security level is:

$$b \le \frac{r \cdot \log \dfrac{1}{1-p_e} - 2\lambda + 2}{1 - \log \dfrac{1}{1-p_e}} \quad (2)$$

Meanings of $b$, $r$, $p_e$, and $\lambda$ are the same as those in the formula (1). According to the formula (2), the packet length may be customized based on the security level and the bit error rate of the third apparatus. It can be seen from the formula (2) that there are two cases: a case of $r \ge b$ and a case of $r < b$.

For the case of $r \ge b$, preprocessing and post-processing processes in the second example are basically similar to those in the first example. For the preprocessing and post-processing processes in the second example, refer to the first example. Details are not described herein again.

The following describes the case of $r < b$ in the second example.

Specifically, the preprocessing process is as follows:

1. A to-be-sent message $M \in \{0,1\}^l$ is input, where a length of the to-be-sent message $M$ is $l$; and the to-be-sent message is divided based on a message packet length $b$, to obtain $q = \lceil l/b \rceil$ message packets, where the message packet is denoted as $m_i$, $i$ is an integer, and a value of $i$ is 1, 2, ..., or $q$.

2. $q$ random bit strings are generated, where the random bit string is denoted as $r_i \in \{0,1\}^r$, and a length is $r$, and the random bit strings may be generated by any random number generator.

3. Extraction operation H: $k_i = S \odot (r_i \| 0^{b-r})$, where $\odot$ indicates multiplication on a finite field GF($2^r$), $S \in \{0,1\}^b$, that is, $S$ is a random bit string whose length is $b$, and $\| 0^{b-r}$ indicates that $(b - r)$ 0s are appended in series.

4. $c_i = m_i \oplus k_i$ is calculated, where $\oplus$ indicates an exclusive OR operation.

5. Concatenation operation: $r_1 \| c_1 \| ... \| r_q \| c_q$, where "$\|$" indicates the concatenation operation, and a sequence is not limited, provided that the two parties specify the sequence. A concatenated bit string is output in the pre-processing process.

Correspondingly, the post-processing process is specifically as follows:

1. Error correction code is used, and $r_i$ and $c_i$ are obtained through division, and $S$ is known.

2. An operation of an extractor: $k_i = S \odot (r_i \| 0^{b-r})$.

3. $m_i = c_i \oplus k_i$ is calculated, where $\oplus$ indicates an exclusive OR operation.

4. A message $M = m_1 \| m_2 \| ... \| m_q$ is obtained.

In this example, the to-be-sent message M is an example of the first data, $c_i$ is an example of the third data, and data obtained by concatenating $r_i$ and $c_i$ is an example of the second data. In addition, in the case of $r < b$, when the second data is sent, because the length $r$ of the random string is less than the packet length $b$, a rate loss is small, and a bit rate is higher, the random string $r_i$ and the third data $c_i$ may be sent by using the physical layer security transmission technology.

In an implementation of S210, that the first apparatus preprocesses the first data based on the bit error rate of the third apparatus includes: The first apparatus divides the first data based on the bit error rate of the third apparatus.

In an example of this implementation, a correspondence between the bit error rate and the security level is:

$$b \le \frac{\lambda}{\log \dfrac{1}{1-p_e}} \quad (3)$$

Meanings of $b$, $p_e$, and $\lambda$ are the same as those in the formula (1). According to the formula (3), the packet length may be customized based on the security level and the bit error rate of the third apparatus. For specific preprocessing and post-processing manners, refer to the preprocessing and post-processing manners corresponding to the foregoing formula (1) and formula (2). A difference lies in that when preprocessing is performed according to the formula (3), the first random string may not be generated, and after the preprocessing, only the third data $c_i$ may be sent, that is, the first random string $r_i$ does not need to be sent, and the third data $c_i$ may still be sent by using the conventional physical layer transmission technology.

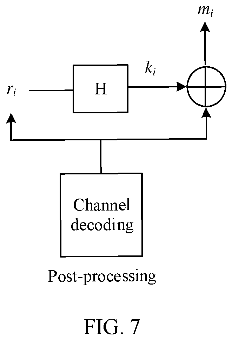

The following describes the preprocessing and post-processing processes with reference to FIG. 6 and FIG. 7.

FIG. 6 is a diagram of a preprocessing process according to an embodiment of this application. As shown in FIG. 6, the first data obtained through division by the first apparatus is denoted as $m_i$, and the extraction operation (an H operation in FIG. 6) is performed on the generated random string $r_i$ (an example of the first random string), to obtain a bit string $k_i$ (an example of the first bit string). An operation is performed on $k_i$ and $m_i$, to obtain data that is denoted as $c_i$, namely, physical layer data. Physical layer processing, including but not limited to channel encoding, may be performed on $c_i$ and $r_i$, and then data is sent to the receive end.

FIG. 7 is a diagram of a post-processing process according to an embodiment of this application. As shown in FIG. 7, physical layer processing is performed on the data received by the receive end, to obtain the random strings $r_i$ and $c_i$. The physical layer processing includes but is not limited to channel decoding. In addition, an extraction operation (an H operation in FIG. 7) is performed on the random string $r_i$, to obtain the bit string $k_i$, and an operation is performed on $k_i$ and $c_i$, to obtain the divided first data $m_i$.

It should be understood that $k_i$ in FIG. 6 and FIG. 7 may be understood as an equivalent key. The random string $r_i$ may be used to extract and spread the random entropy introduced to the illegitimate channel by using the physical layer security transmission technology, to obtain the equivalent key $k_i$ that is approximately evenly distributed. The divided first data is preprocessed based on the equivalent key $k_i$, so that each bit of the first data can obtain provable security strength.

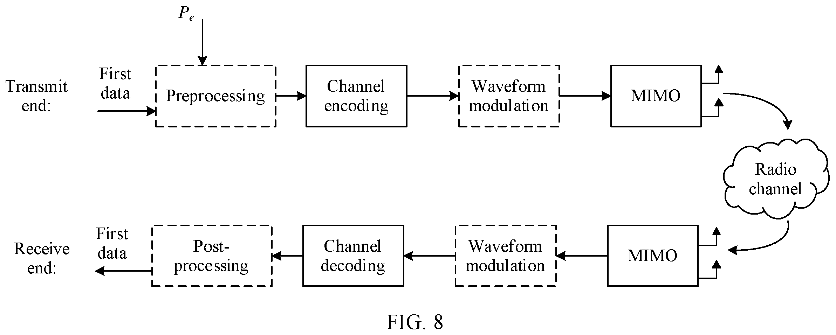

FIG. 8 is a schematic flowchart of data transmission according to this application. As shown in FIG. 8, after the preprocessing, the to-be-sent first data sequentially enters a channel encoding procedure, a waveform modulation procedure, and a multiple input multiple output (multiple input multiple output, MIMO) procedure, and is sent to the receive end through a radio channel. The data received by the receive end sequentially enters a MIMO procedure, a waveform modulation procedure, and a channel encoding procedure, and then is postprocessed, to obtain the to-be-sent first data. In the preprocessing process, the bit error rate of the third apparatus is considered.

Optionally, in any one of the foregoing implementations, the method 200 further includes: The first apparatus sends first information to the second apparatus, or receives first information from the second apparatus. The first information indicates the security level.

Specifically, the first information may be indication information. For example, the indication information is an index of the security level, and a correspondence exists between the first information and the security level. For another example, the indication information is an index of a type of the terminal device, or the indication information may indicate the type of the terminal device, and a correspondence exists between the type of the terminal device and the communication security level. The type of the terminal device may be a mobile phone, a wearable device, an IoT terminal, or the like. After the transmit end sends the first information, the receive end may learn of the security level based on the first information. The transmit end may be the first apparatus or the second apparatus.

Optionally, in any one of the foregoing implementations, the method 200 further includes: The first apparatus receives second information from the second apparatus, or sends second information to the second apparatus. The second information indicates the bit error rate.

Specifically, the first information may be indication information. For example, the indication information is an index of the security level, and a correspondence exists between the first information and the security level. After the transmit end sends the first information, the receive end may learn of the security level based on the first information. The transmit end may be the first apparatus or the second apparatus.

Optionally, in any one of the foregoing implementations, the method 200 further includes: The first apparatus determines the bit error rate.

The bit error rate of the third apparatus is related to the physical layer security transmission technology. There may be a coupling relationship between the bit error rate of the third apparatus and the physical layer security transmission technology, and both are affected by a receiver model of the third apparatus. In one method, a physical layer security transmission technology is specified, the receiver model of the third apparatus is assumed, and a bit error rate that can be introduced to the third apparatus end by using the physical layer security transmission technology is estimated. In another method, an expected bit error rate of the third apparatus is specified, the receiver model of the third apparatus is assumed, and a physical layer security transmission technology is determined.

For example, that the first apparatus determines the bit error rate includes: The first apparatus determines a confined region, where the second apparatus is located in the confined region, and the third apparatus is located outside the confined region; determines an optimal communication location outside the confined region, where the third apparatus has optimal receiving performance at the optimal communication location; and determines the bit error rate based on the optimal communication location.

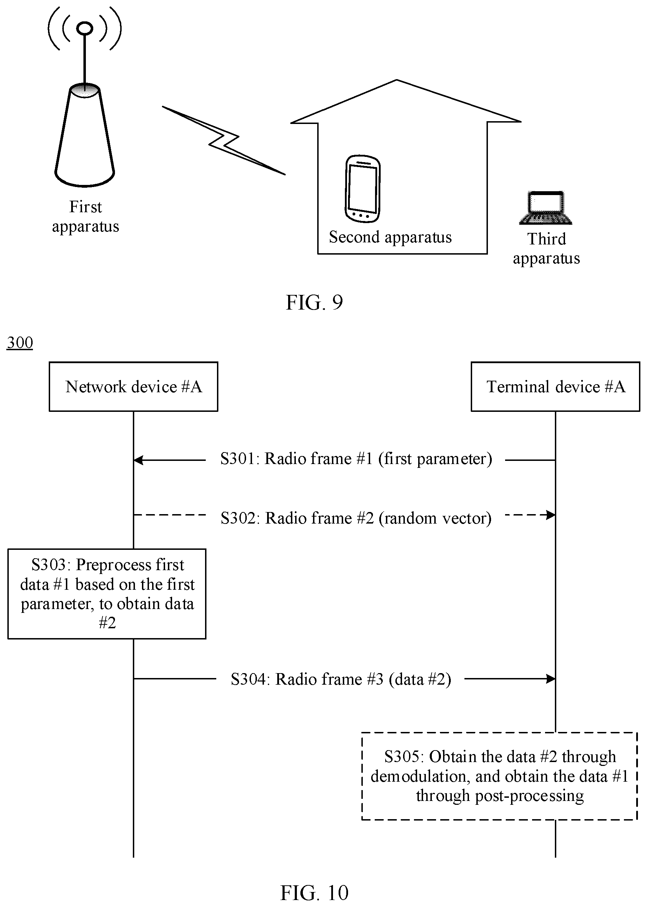

Specifically, for example, the first apparatus is a network device, the second apparatus is a terminal device, and the third apparatus is an assumed listener. The confined region (confined region) is a region in which a specific legitimate terminal has no listener. For example, FIG. 9 is a diagram of a confined region. As shown in FIG. 9, a legitimate terminal #1 is in a room, and usually there is no listener in the room. Therefore, the room may be considered as a confined region. For another example, the confined region may alternatively be a vehicle, a factory, or the like, and these regions are closed and under control. Therefore, it may be considered that there is no listener in these regions. For another example, when the terminal is carried on the user, it may be considered that there is no listener within some ranges, for example, within 1 m. The confined region may be a range centered on the terminal. After the confined region is determined, an optimal point of the listener needs to be determined, and performance of the listener is the best at the point. A determining method may be determining based on the physical layer security transmission technology, a network topology, a parameter of the network device, and the like. For example, the physical layer security transmission technology uses the artificial noise solution. In a network planning phase, after the artificial noise solution is used, it may be roughly estimated that a point with lowest noise energy outside the confined region is a point with a highest received signal-to-interference-plus-noise ratio, and this point is an optimal listening point of the listener. After the optimal listening point is determined, a bit error rate of the listener may be estimated. Estimation of the bit error rate needs to be combined with the receiver model of the listener. In the security field, it is usually assumed that a receiving capability of the listener exceeds the legitimate terminal. Therefore, in the estimation process, it is usually assumed that the listener uses an optimal receiver algorithm and has a sufficient computing capability.

It should be understood that the foregoing uses an example in which the first apparatus determines the bit error rate of the third apparatus. This application is not limited thereto. The bit error rate of the third apparatus may alternatively be determined by the receive end device (namely, the second apparatus), and sent to the transmit end device (namely, the first apparatus). For a determining manner of the second apparatus, refer to the determining manner of the first apparatus. Details are not described herein again.

It should be further understood that, during actual application, it is very difficult to obtain a real bit error rate of the third apparatus. Therefore, determining the bit error rate of the third apparatus may also be understood as that the first apparatus or the second apparatus estimates the bit error rate of the third apparatus.

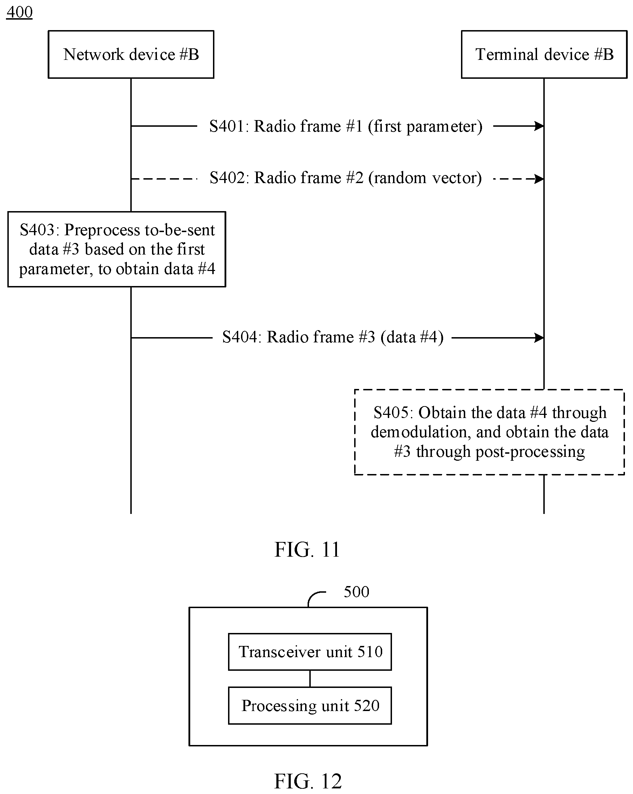

The following specifically describes, with reference to FIG. 10 and FIG. 11, the secure communication method 200 for a wireless physical layer provided in this application.

FIG. 10 shows a secure communication method 300 for a wireless physical layer according to this application. The method 300 is a specific implementation of the method 200. In the method 300, for example, a first apparatus is a network device #A, and a second apparatus is a terminal device #A. As shown in FIG. 10, the method 300 includes the following steps:

S301: The terminal device #A sends a radio frame #1 to the network device #A.

The radio frame #1 carries a first parameter, the first parameter may be understood as a parameter of a preprocessing module and a post-processing module, and the first parameter may include a security level requirement and a bit error rate of a third apparatus. Based on the first parameter, the network device #A may preprocess to-be-sent data #1 (an example of the first data) that has a security requirement. Optionally, the data #1 is also physical layer data.

Optionally, if the network device #A cannot meet a security level requirement of the terminal device #A, the network device #A may send the security level to the terminal device #A. The security level may be lower than the security level requirement of the terminal device #A. The network device #A may perform preprocessing based on the sent security level, and the terminal device #A may perform postprocessing based on the received security level.

The terminal device #A receives and demodulates the radio frame #1, to obtain the first parameter.

S302: The network device #A sends a radio frame #2, where the radio frame #2 carries a random vector (an example of the second random string).

S302 and S301 may be performed simultaneously, that is, the random vector and the first parameter may be carried in a same radio frame.

Optionally, S302 is not performed, the random vector is defined in a protocol, and a transmit end and a receive end do not need to perform synchronization through signaling interaction.

S303: The network device #A preprocesses the data #1 based on the first parameter, to obtain data #2 (an example of the second data).

S304: The network device #A sends a radio frame #3 to the terminal device #A.

The radio frame #3 is a signal used to modulate the preprocessed data #1, that is, the radio frame #3 includes the data #2.

S305: The terminal device #A demodulates the radio frame #3, to obtain the data #2. The terminal device #A post-processes the data #2, to obtain the data #1. The post-processing is performed based on the first parameter.

FIG. 11 shows a secure communication method 400 for a wireless physical layer according to this application. The method 400 is a specific implementation of the method 200. In the method 400, for example, a first apparatus is a network device #B, and a second apparatus is a terminal device #B. As shown in FIG. 11, the method 400 includes the following steps:

S401: The network device #B sends a radio frame #1 to the terminal device #B.

The radio frame #1 carries a first parameter, the first parameter may be understood as a parameter of a preprocessing module and a post-processing module, and the first parameter may include a security level and a bit error rate of a third apparatus. It should be understood that, a difference between the method 300 and the method 400 lies in that the network device may perform unified configuration on to-be-sent data that has a security requirement, so that the network device #B may indicate a preprocessing security level to the terminal device #B.

The terminal device #B receives and demodulates the radio frame #1, to obtain the first parameter.

S402: The network device #B sends a radio frame #2, where the radio frame #2 carries a random vector (an example of the second random string).

S402 and S401 may be performed simultaneously, that is, the random vector and the first parameter may be carried in a same radio frame.

Optionally, S402 is not performed, the random vector is defined in a protocol, and a transmit end and a receive end do not need to perform synchronization through signaling interaction.

S403: The network device #B preprocesses the data #3 (an example of the first data) based on the first parameter, to obtain data #4 (an example of the second data).

S404: The network device #B sends a radio frame #3 to the terminal device #B.

The radio frame #3 is a signal used to modulate the preprocessed data #3, that is, the radio frame #2 includes the data #4.

S405: The terminal device #B demodulates the radio frame #3, to obtain the data #4. The terminal device #B post-processes the data #4, to obtain the data #3. The post-processing is performed based on the first parameter.

The steps in the dashed lines in the foregoing flowchart are optional steps, and a sequence of the steps is determined based on internal logic of the method. Sequence numbers shown in the foregoing flowchart are merely examples, and do not limit a sequence of the steps in this application.

It should be understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be further understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually indicates an "or" relationship between the associated objects, but may also indicate an "and/or" relationship. For details, refer to the context for understanding.

In embodiments of this application, unless otherwise specified, "a plurality of" means two or more.

In embodiments of this application, "at least one item (piece)" means one or more items (pieces), and "at least two items (pieces)" and "a plurality of items (pieces)" mean two or more items (pieces). "At least one of the following items (pieces)" or a similar expression thereof indicates any combination of these items, including a single item (piece) or any combination of a plurality of items (pieces). For example, at least one of a, b, or c may represent: a, b, c, a-b, a-c, b-c, or a-b-c, where a, b, and c may be singular or plural.

It should be noted that, an execution entity shown in FIG. 5, FIG. 10, or FIG. 11 is merely an example, and the execution entity may alternatively be a chip, a chip system, or a processor that supports the execution entity in implementing the method shown in FIG. 5, FIG. 10, or FIG. 11. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, the method and the operation implemented by the first apparatus may also be implemented by a component (for example, a chip or a circuit) in the first apparatus, and the method and the operation implemented by the second apparatus may also be implemented by a component (for example, a chip or a circuit) in the second apparatus.

The solutions provided in embodiments of this application are mainly described above from a perspective of interaction between apparatuses. It may be understood that, to implement the foregoing functions, each apparatus such as a transmitter device or a receiver device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. Descriptions are provided below by using an example in which each functional module is obtained through division based on each corresponding function.

FIG. 12 is a block diagram of a communication apparatus according to an embodiment of this application. A communication apparatus 500 shown in FIG. 12 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the transceiver unit 510 may include a sending unit and a receiving unit. The sending unit is configured to perform a sending operation in the foregoing method embodiments. The receiving unit is configured to perform a receiving operation in the foregoing method embodiments.

It should be noted that the communication apparatus 500 may include the sending unit, but does not include the receiving unit. Alternatively, the communication apparatus 500 may include the receiving unit, but does not include the sending unit. This specifically depends on whether the foregoing solution performed by the communication apparatus 500 includes sending actions and receiving actions.

Optionally, the communication apparatus 500 may further include a storage unit. The storage unit may be configured to store instructions and/or data. The processing unit 520 may read the instructions and/or the data in the storage unit.

In a design, the communication apparatus 500 may be configured to perform an action performed by the first apparatus in the foregoing method embodiments.

Optionally, the communication apparatus 500 may perform an action performed by the first apparatus in the foregoing method embodiments. The first apparatus may be a terminal device or a network device, or may be a chip or a circuit in the terminal device or the network device, or may be a logical module or software that can implement all or some functions of the terminal device or the network device. This is not limited in this application.

Optionally, the communication apparatus 500 may be the first apparatus, the transceiver unit 510 is configured to perform receiving or sending operations of the first apparatus in the foregoing method embodiments, and the processing unit 520 is configured to perform an internal processing operation of the first apparatus in the foregoing method embodiments.

Optionally, the communication apparatus 500 may be a device including the first apparatus. Alternatively, the communication apparatus 500 may be a component configured in the first apparatus, for example, a chip in the first apparatus. In this case, the transceiver unit 510 may be an interface circuit, a pin, or the like. Specifically, the interface circuit may include an input circuit and an output circuit, and the processing unit 520 may include a processing circuit.

In a possible implementation, the processing unit 520 is configured to preprocess first data based on a bit error rate of a third apparatus, where the preprocessing is used to enable communication between the first apparatus and a second apparatus to reach a security level. The transceiver unit 510 is configured to send second data to the second apparatus, where the second data is data obtained by preprocessing the first data.

In a possible implementation, the processing unit 520 is specifically configured to: divide the first data based on the bit error rate of the third apparatus; or divide the first data based on the bit error rate of the third apparatus, and generate a first random string.

In a possible implementation, the processing unit 520 is specifically configured to determine a packet length of the first data based on the bit error rate and the security level, and divide the first data at a granularity of the packet length.

In a possible implementation, the processing unit 520 is further configured to perform an operation on the divided first data based on the first random string.

In a possible implementation, the processing unit 520 is specifically configured to obtain a first bit string based on the first random string and a second random string, and perform an operation on the divided first data based on the first bit string.

In a possible implementation, a length of the first random string is greater than or equal to the packet length, and a length of a second random vector is equal to the length of the first random string.

In a possible implementation, a length of the first random string is less than the packet length, and a length of a second random vector is equal to the packet length.

In a possible implementation, the transceiver unit 510 is further configured to send the second random string to the second apparatus.

In a possible implementation, the packet length is a block size of channel encoding.

In a possible implementation, the transceiver unit 510 is further configured to send first information to the second apparatus, or receive first information from the second apparatus. The first information indicates the security level.

In a possible implementation, the first information is indication information.

In a possible implementation, the indication information indicates a type of a terminal device, and there is a correspondence between the type of the terminal device and the communication security level.

In a possible implementation, the transceiver unit 510 is further configured to receive second information from the second apparatus, or send second information to the second apparatus. The second information indicates the bit error rate.

In a possible implementation, the second information is indication information.

In a possible implementation, the processing unit 520 is further configured to determine the bit error rate.

In a possible implementation, the processing unit 520 is specifically configured to determine a confined region, where the second apparatus is located in the confined region, and the third apparatus is located outside the confined region; determine an optimal communication location outside the confined region, where the third apparatus has optimal receiving performance at the optimal communication location; and determine the bit error rate based on the optimal communication location.

In a design, the communication apparatus 500 may be configured to perform an action performed by the second apparatus in the foregoing method embodiments.

Optionally, the communication apparatus 500 may perform an action performed by the second apparatus in the foregoing method embodiments. The second apparatus may be a terminal device or a network device, or may be a chip or a circuit in the terminal device or the network device, or may be a logical module or software that can implement all or some functions of the terminal device or the network device. This is not limited in this application.

Optionally, the communication apparatus 500 may be the second apparatus, the transceiver unit 510 is configured to perform receiving or sending operations of the second apparatus in the foregoing method embodiments, and the processing unit 520 is configured to perform an internal processing operation of the second apparatus in the foregoing method embodiments.

Optionally, the communication apparatus 500 may be a device including the second apparatus. Alternatively, the communication apparatus 500 may be a component configured in the second apparatus, for example, a chip in the second apparatus. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to receive second data from a first apparatus, and the processing unit 520 is configured to post-process the second data, to obtain first data. The second data is data obtained by preprocessing the first data based on a bit error rate of a third apparatus, and the preprocessing is used to enable communication between the first apparatus and the second apparatus to reach a security level.

In a possible implementation, the processing unit 520 is specifically configured to divide the second data, and process the divided second data based on a second random string.

In a possible implementation, the second data includes a first random string. The processing unit 520 is further configured to obtain a first bit string based on the first random string and the second random string, and perform an operation on the divided second data based on the first bit string.

In a possible implementation, the transceiver unit 510 is further configured to receive the second random string from the first apparatus.

In a possible implementation, the transceiver unit 510 is further configured to receive first information from the first apparatus, or send the first information to the first apparatus. The first information indicates the security level.

In a possible implementation, the first information is indication information.

In a possible implementation, the indication information indicates a type of a terminal device, and there is a correspondence between the type of the terminal device and the communication security level.

In a possible implementation, the transceiver unit 510 is further configured to receive second information from the first apparatus, or send second information to the first apparatus. The second information indicates the bit error rate.

In a possible implementation, the second information is indication information.

In a possible implementation, the processing unit 520 is further configured to determine the bit error rate.

In a possible implementation, the processing unit 520 is specifically configured to determine a confined region, where the second apparatus is located in the confined region, and the third apparatus is located outside the confined region; determine an optimal communication location outside the confined region, where the third apparatus has optimal receiving performance at the optimal communication location; and determine the bit error rate based on the optimal communication location.

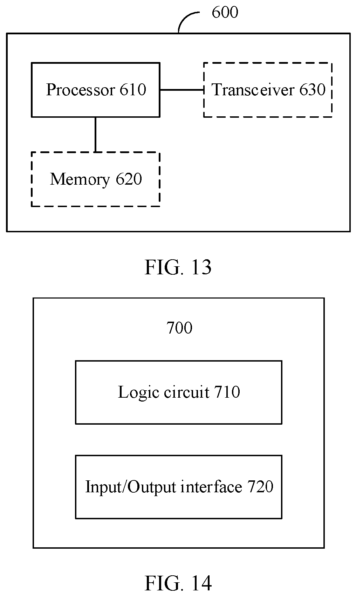

As shown in FIG. 13, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the methods in the foregoing method embodiments are performed.

Optionally, the communication apparatus 600 includes one or more processors 610.

Optionally, as shown in FIG. 13, the communication apparatus 600 may further include the memory 620.

Optionally, the communication apparatus 600 may include one or more memories 620.

Optionally, the memory 620 and the processor 610 may be integrated, or separately disposed.

Optionally, as shown in FIG. 13, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

Optionally, a component that is in the transceiver 630 and that is configured to implement a receiving function may be considered as a receiving module, and a component that is in the transceiver 630 and that is configured to implement a sending function may be considered as a sending module. In other words, the transceiver 630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitter, a transmitting module, a transmitting circuit, or the like.

In a solution, the communication apparatus 600 is configured to implement operations performed by the first apparatus in the foregoing method embodiments. For example, the processor 610 is configured to implement an operation (for example, an operation in S210) performed inside the first apparatus in the foregoing method embodiments, and the transceiver 630 is configured to implement a receiving or sending operation (for example, an operation in S220) performed by the first apparatus in the foregoing method embodiments.

In another solution, the communication apparatus 600 is configured to implement operations performed by the second apparatus in the foregoing method embodiments. For example, the processor 610 is configured to implement an operation (for example, an operation in S230) performed inside the second apparatus in the foregoing method embodiments, and the transceiver 630 is configured to implement a receiving or sending operation (for example, an operation in S220) performed by the second apparatus in the foregoing method embodiments.

As shown in FIG. 14, an embodiment of this application further provides a communication apparatus 700. The communication apparatus 700 includes a logic circuit 710 and an input/output interface (input/output interface) 720.

The logic circuit 710 may be a processing circuit in the communication apparatus 700. The logic circuit 710 may be connected to a storage unit through coupling, and invoke instructions in the storage unit, so that the communication apparatus 700 can implement the methods and functions in embodiments of this application. The input/output interface 720 may be an input/output circuit in the communication apparatus 700, and outputs information processed by the communication apparatus 700, or inputs to-be-processed data or signaling information to the communication apparatus 700 for processing.

In a solution, the communication apparatus 700 is configured to implement an operation performed by the data processing apparatus in each of the foregoing method embodiments.

For example, the logic circuit 710 is configured to implement processing-related operations performed by the first apparatus in the foregoing method embodiments, for example, S210. The input/output interface 720 is configured to implement a sending and/or receiving-related operation performed by the first apparatus in the foregoing method embodiment, for example, S220. For a specific operation performed by the logic circuit 710, refer to the foregoing descriptions of the processing unit 520. For an operation performed by the input/output interface 720, refer to the foregoing descriptions of the transceiver unit 510. Details are not described herein again.

In another solution, the communication apparatus 700 is configured to implement an operation performed by the data orchestration apparatus in each of the foregoing method embodiments.

For example, the logic circuit 710 is configured to implement a processing-related operation performed by the second apparatus in the foregoing method embodiments, for example, a processing-related operation performed by the second apparatus in the method embodiments, for example, S230. The input/output interface 720 is configured to implement a sending and/or receiving-related operation performed by the second apparatus in the foregoing method embodiments, for example, S220. For a specific operation performed by the logic circuit 710, refer to the foregoing descriptions of the processing unit 720. For a specific operation performed by the logic circuit 710, refer to the foregoing descriptions of the processing unit 520. For an operation performed by the input/output interface 720, refer to the foregoing descriptions of the transceiver unit 510. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer-readable medium. The computer-readable medium stores program code. When the program code is run on a computer, the computer is enabled to perform the method shown in the method embodiments. For example, when a computer program is executed by a computer, the computer is enabled to implement the method performed by the first apparatus or the method performed by the second apparatus in the foregoing method embodiments.

An embodiment of this application further provides a computer program product including instructions. When the instructions are executed by a computer, the computer is enabled to implement the method performed by the first apparatus or the method performed by the second apparatus in the foregoing method embodiments.

An embodiment of this application further provides a communication system, including a first apparatus and a second apparatus.

For explanations and beneficial effect of related content in any communication apparatus provided above, refer to the foregoing corresponding method embodiments. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The data orchestration apparatus and the data processing apparatus in the foregoing apparatus embodiments correspond to the data orchestration apparatus and the data processing apparatus in the method embodiments, and corresponding modules or units perform corresponding steps. For example, a communication unit (transceiver) performs a receiving or sending step in the method embodiments, and a processing unit (processor) may perform a step other than the sending and receiving steps. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method for a wireless physical layer, comprising:

    preprocessing, by a first apparatus, first data based on a bit error rate of a third apparatus, wherein the preprocessing is used to enable communication between the first apparatus and a second apparatus to reach a security level; and

sending, by the first apparatus, second data to the second apparatus, wherein the second data is data obtained by preprocessing the first data.

2. The method according to claim 1, wherein the preprocessing, by a first apparatus, first data based on a bit error rate of a third apparatus comprises:

dividing, by the first apparatus, the first data based on the bit error rate of the third apparatus; or

dividing, by the first apparatus, the first data based on the bit error rate of the third apparatus, and generating a first random string.

3. The method according to claim 2, wherein the dividing, by the first apparatus, the first data based on the bit error rate of the third apparatus comprises:

determining, by the first apparatus, a packet length of the first data based on the bit error rate and the security level; and

dividing, by the first apparatus, the first data at a granularity of the packet length.

4. The method according to claim 3, wherein the method further comprises:
performing, by the first apparatus, an operation on the divided first data based on the first random string.

5. The method according to claim 4, wherein the performing, by the first apparatus, an operation on the divided first data based on the first random string comprises:

obtaining, by the first apparatus, a first bit string based on the first random string and a second random string; and

performing, by the first apparatus, an operation on the divided first data based on the first bit string.

6. The method according to claim 5, wherein a length of the first random string is greater than or equal to the packet length, and a length of the second random vector is equal to the length of the first random string.

7. The method according to claim 5, wherein a length of the first random string is less than the packet length, and a length of the second random vector is equal to the packet length.

8. The method according to any one of claims 5 to 7, wherein the method further comprises:
sending, by the first apparatus, the second random string to the second apparatus.

9. The method according to any one of claims 3 to 8, wherein the packet length is a block size of channel encoding.

10. The method according to any one of claims 1 to 9, wherein the method further comprises:

sending, by the first apparatus, first information to the second apparatus; or

receiving, by the first apparatus, first information from the second apparatus, wherein
the first information indicates the security level.

11. The method according to claim 10, wherein the first information is indication information, the indication information indicates a type of a terminal device, and there is a correspondence between the type of the terminal device and the communication security level.

12. The method according to any one of claims 1 to 11, wherein the method further comprises:

receiving, by the first apparatus, second information from the second apparatus; or

sending, by the first apparatus, second information to the second apparatus, wherein
the second information indicates the bit error rate.

13. The method according to any one of claims 1 to 12, wherein the method further comprises:
determining, by the first apparatus, the bit error rate.

14. The method according to claim 13, wherein the determining, by the first apparatus, the bit error rate comprises:

determining, by the first apparatus, a confined region, wherein the second apparatus is located in the confined region, and the third apparatus is located outside the confined region;

determining, by the first apparatus, an optimal communication location outside the confined region, wherein the third apparatus has optimal receiving performance at the optimal communication location; and

determining, by the first apparatus, the bit error rate based on the optimal communication location.

15. A secure communication method for a wireless physical layer, comprising:

receiving, by a second apparatus, second data from a first apparatus; and

post-processing, by the second apparatus, the second data, to obtain first data, wherein the second data is data obtained by preprocessing the first data based on a bit error rate of a third apparatus, and the preprocessing is used to enable communication between the first apparatus and the second apparatus to reach a security level.

16. The method according to claim 15, wherein the postprocessing, by the second apparatus, the second data comprises:

dividing, by the second apparatus, the second data; and
processing, by the second apparatus, the divided second data based on a second random string.

17. The method according to claim 16, wherein the second data comprises a first random string, and the processing, by the second apparatus, the divided second data based on a second random string comprises:

obtaining, by the second apparatus, a first bit string based on the first random string and the second random string; and
performing, by the second apparatus, an operation on the divided second data based on the first bit string.

18. The method according to claim 16 or 17, wherein the method further comprises:
receiving, by the second apparatus, the second random string from the first apparatus.

19. The method according to any one of claims 15 to 18, wherein the method further comprises:

receiving, by the second apparatus, first information from the first apparatus; or
sending, by the second apparatus, first information to the first apparatus, wherein
the first information indicates the security level.

20. The method according to claim 19, wherein the first information is indication information, the indication information indicates a type of a terminal device, and there is a correspondence between the type of the terminal device and the communication security level.

21. The method according to any one of claims 15 to 20, wherein the method further comprises:

receiving, by the second apparatus, second information from the first apparatus; or
sending, by the second apparatus, second information to the first apparatus, wherein

the second information indicates the bit error rate.

22. The method according to any one of claims 15 to 21, wherein the method further comprises:
determining, by the second apparatus, the bit error rate.

23. The method according to claim 22, wherein the determining, by the second apparatus, the bit error rate comprises:

determining, by the second apparatus, a confined region, wherein the second apparatus is located in the confined region, and the third apparatus is located outside the confined region;
determining, by the second apparatus, an optimal communication location outside the confined region, wherein the third apparatus has optimal receiving performance at the optimal communication location; and
determining, by the second apparatus, the bit error rate based on the optimal communication location.

24. A communication apparatus, wherein the apparatus comprises a unit configured to perform steps in the method according to any one of claims 1 to 14, or the apparatus comprises a unit configured to perform steps in the method according to any one of claims 15 to 23.

25. A communication apparatus, wherein the apparatus comprises a processor, the processor is coupled to a memory, the memory stores instructions, and when the instructions are run by the processor, the processor is enabled to perform the method according to any one of claims 1 to 14, or perform the method according to any one of claims 15 to 23.

26. A communication apparatus, wherein the apparatus comprises a logic circuit, and the logic circuit is coupled to an input/output interface, and is configured to perform data transmission through the input/output interface, to perform the method according to any one of claims 1 to 14, or perform the method according to any one of claims 15 to 23.

27. A communication system, wherein the system comprises a first apparatus and a third apparatus, the first apparatus is configured to perform the method according to any one of claims 1 to 14, and the third apparatus is configured to perform the method according to any one of claims 15 to 23.

28. A computer-readable storage medium, wherein the computer-readable storage medium is configured to store a computer program, and when the computer program is run on a computer, the computer is enabled to perform the method according to any one of claims 1 to 14, or perform the method according to any one of claims 15 to 23.

29. A computer program product, wherein the computer program product comprises computer program code, and when the computer program code is run, the method according to any one of claims 1 to 14 is implemented, or the method according to any one of claims 15 to 23 is performed.

100

Network
device
110

Terminal
device
120

FIG. 1

Preprocessing/
Post-processing module

Physical layer

Antenna

FIG. 2

Artificial
noise

UE #2

gNB

UE #1

Artificial
noise

UE #3

FIG. 3

FIG. 4

200

| First apparatus | | Second apparatus |

S210: Preprocess first data, where the preprocessing is performed based on a bit error rate of a third apparatus, and the preprocessing is used to enable communication between the first apparatus and the second apparatus to reach a security level

S220: Second data, where the second data is data obtained by preprocessing the first data

S230: Post-process the second data, to obtain the first data

FIG. 5

$m_i$

$r_i$ → H → $k_i$ → ⊕

Channel encoding

Preprocessing

FIG. 6

$$m_i$$

$$r_i \longrightarrow \boxed{\text{H}} \xrightarrow{k_i} \bigoplus$$

Channel
decoding

Post-processing

FIG. 7

$P_e$

Transmit end:

First data → Preprocessing → Channel encoding → Waveform modulation → MIMO

Radio channel

Receive end:

First data ← Post-processing ← Channel decoding ← Waveform modulation ← MIMO

FIG. 8

First
apparatus

Second apparatus

Third
apparatus

FIG. 9

300

| Network device #A | Terminal device #A |

S301: Radio frame #1 (first parameter)

S302: Radio frame #2 (random vector)

S303: Preprocess first
data #1 based on the first
parameter, to obtain data
#2

S304: Radio frame #3 (data #2)

S305: Obtain the data #2 through
demodulation, and obtain the data #1
through post-processing

FIG. 10

400

| Network device #B | | Terminal device #B |

S401: Radio frame #1 (first parameter) ——→

S402: Radio frame #2 (random vector) - - →

S403: Preprocess to-be-sent data #3 based on the first parameter, to obtain data #4

S404: Radio frame #3 (data #4) ——→

S405: Obtain the data #4 through demodulation, and obtain the data #3 through post-processing

FIG. 11

500

Transceiver unit 510

Processing unit 520

FIG. 12

600

Processor 610 ———— Transceiver 630

Memory 620

FIG. 13

700

Logic circuit 710

Input/Output interface 720

FIG. 14

## INTERNATIONAL SEARCH REPORT

| International application No. |
|---|
| **PCT/CN2022/125368** |

**A. CLASSIFICATION OF SUBJECT MATTER**

H04L 27/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

ENTXT, DWPI, CNTXT, ENTXTC, CNKI: 安全, 安全等级, 比特错误概率, 等级, 分级, 分类, 分组, 级别, 加密, 类别, 物理层, 误码率, BER, security, level, class, classify, group, physical layer, bit error rate, alice, bob, eve, bit error probability, encryption, category

**C. DOCUMENTS CONSIDERED TO BE RELEVANT**

| Category* | Citation of document, with indication, where appropriate, of the relevant passages | Relevant to claim No. |
|---|---|---|
| X | US 2016043832 A1 (LG ELECTRONICS INC.) 11 February 2016 (2016-02-11) description, paragraphs 0011-0023 and 0059-0149 | 1-29 |
| X | CN 106100710 A (54TH RESEARCH INSTITUTE OF CHINA ELECTRONICS TECHNOLOGY GROUP CORPORATION) 09 November 2016 (2016-11-09) description, paragraphs 0002-0036 and 0042-0099 | 1-29 |
| X | CN 108494463 A (XIDIAN UNIVERSITY) 04 September 2018 (2018-09-04) description, paragraphs 0005-0020 and 0025-0077 | 1-29 |
| A | CN 111726221 A (UNIVERSITY OF ELECTRONIC SCIENCE AND TECHNOLOGY OF CHINA) 29 September 2020 (2020-09-29) entire document | 1-29 |
| A | CN 114553274 A (BEIJING INSTITUTE OF TECHNOLOGY) 27 May 2022 (2022-05-27) entire document | 1-29 |
| A | US 2014171856 A1 (GEORGIA TECH RESEARCH CORP. et al.) 19 June 2014 (2014-06-19) entire document | 1-29 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 June 2023** | **05 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/125368**

| Patent document cited in search report | | | Publication date (day/month/year) | Patent family member(s) | Publication date (day/month/year) |
|---|---|---|---|---|---|
| US | 2016043832 | A1 | 11 February 2016 | None | |
| CN | 106100710 | A | 09 November 2016 | None | |
| CN | 108494463 | A | 04 September 2018 | None | |
| CN | 111726221 | A | 29 September 2020 | None | |
| CN | 114553274 | A | 27 May 2022 | None | |
| US | 2014171856 | A1 | 19 June 2014 | None | |

Form PCT/ISA/210 (patent family annex) (July 2022)